# DEMANDE DE BREVET EUROPEEN

(11) **EP 1 403 121 A1**
(43) Date de publication de la demande: **31.03.2004**
(21) Numéro de dépôt: 03292350.0
(22) Date de dépôt: 25.09.2003
(51) Int. Cl.: B60K 20/06

(54) **Système de commande de communication d'une fonction à deux états fonctionnant dans deux lieux differérents d'une même région de l'espace**

(30) Priorité: 27.09.2002 FR 0211980
(71) Demandeur: SC2N, 78180 Montigny-le-Bretonneux (FR)
(72) Inventeur: Hallet, Michel, 14320 Clinchamps-Sur-Orne (FR); Tissot, Jean-Marc, 14320 Fontenay Le Marmion (FR); Greal, Patrick, 14370 Argences (FR)
(74) Mandataire: Texier, Christian

(57) **Abrégé**

L'invention concerne un système de commande de commutation (200) pour un véhicule apte à réaliser une fonction présentant deux états, comprenant deux éléments de commande (210, 220) agencés de sorte que chaque élément de commande met en oeuvre la fonction selon un de ces états respectivement , caractérisé en que le système de commande de commutation comporte en outre un mécanisme unique de commutation (230) apte à réaliser la fonction, les deux éléments de commande étant liés à ce mécanisme et s'étendant sensiblement dans une seule et même région de l'espace.

## Description

L'invention concerne les systèmes de commande de boîte de vitesse impulsionelle situé sous un volant d'un véhicule automobile en haut de colonne de direction.

Actuellement, les systèmes de commande de boîte de vitesse impulsionnelle ou séquentielle comportent deux éléments de commande situés de part et d'autre du volant, sous le volant, dans le haut de la colonne de direction. Chacun des éléments de commande permet de changer les rapports en tirant simplement vers le volant ledit élément de commande de manière à changer de rapport selon un sens prédéterminé (montée ou descente). Conventionnellement, le fait de tirer sur l'élément de commande situé à ma droite permet de monter les rapports de la boîte de vitesse alors que tirer sur l'élément de commande situé à ma gauche permet de descendre lesdits rapports de la boîte de vitesse.

Une telle disposition des systèmes de commande de la boîte de vitesse impulsionnelle nécessite de la part de l'utilisateur un certain apprentissage, car l'utilisation peut se révéler relativement peu évidente. De plus, dans des situations délicates, l'utilisateur peut être amené à mal utiliser les palettes ou à les utiliser en même temps ce qui a pour conséquence une incertitude certaine qui peut être dangereuse à l'utilisation : un changement de rapport erroné peut conduire à l'accident.

Un but de l'invention est de fournir un système de commande de boîte de vitesse impulsionnelle plus intuitif à utiliser et nécessitant un apprentissage moindre de la part de l'utilisateur.

A cet effet, on prévoit, selon l'invention, un système de commande de commutation pour un véhicule apte à réaliser une fonction présentant deux états, comprenant deux éléments de commande agencés de sorte que chaque élément de commande met en oeuvre la fonction selon un de ces états respectivement, le système de commande de commutation comportant en outre un mécanisme unique de commutation apte à réaliser la fonction, les deux éléments de commande étant liés à ce mécanisme et s'étendant sensiblement dans une seule et même région de l'espace, l'un parmi les deux éléments de commande étant agencé de sorte que, préalablement à sa mise en oeuvre, un utilisateur doit effectuer un déplacement supplémentaire pour l'atteindre par rapport à l'autre parmi les deux éléments de commande.

Ainsi, le fait que les éléments de commande s'étendent dans une seule et même région de l'espace permet à l'utilisateur d'y accéder à l'aide d'une seule main, l'obligeant à mettre en oeuvre en même temps un seul des deux organes de commande, augmentant ainsi la sécurité d'utilisation du système de commutation.

Avantageusement mais facultativement, le système de commande de commutation présente au moins l'une des caractéristiques suivantes :
- les deux éléments effectuent des déplacements sensiblement identiques l'un par rapport à l'autre lors de leur mise en oeuvre ;
- les deux éléments se déplacent lors de leur mise en oeuvre selon des plans de l'espace parallèles entre eux ;
- les deux états de la fonction sont antagonistes ;
- Le système de commande de commutation est situé au niveau d'un haut de colonne de direction ;
- les éléments de commande s'étendent dans une région de l'espace située sous un volant de direction ;
- les plans de déplacement des éléments de commande sont sensiblement orthogonaux à un plan contenant le volant,
- le système de commande de commutation pilote une boîte de vitesse.

D'autres caractéristiques et avantages de l'invention apparaîtront lors de la description ci-après de deux modes de réalisation. Aux dessins annexés :
- la figure 1 est une vue en trois dimensions d'un premier mode de réalisation de l'invention ;
- la figure 2 est une vue en trois dimensions selon un autre point de vue de mode de réalisation de la figure 1 montée sur le haut de colonne de direction sous le volant de direction ;
- la figure 3 est une vue en trois dimensions d'un deuxième mode de réalisation de l'invention. La figure 4 est une vue en trois dimensions de profil du mode de réalisation de la figure 1 installé sous un volant de direction.

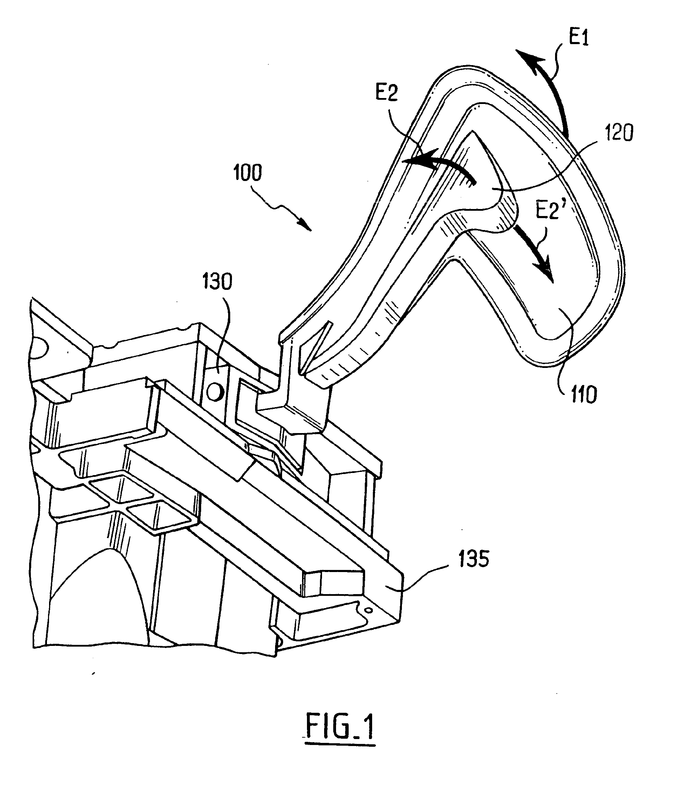

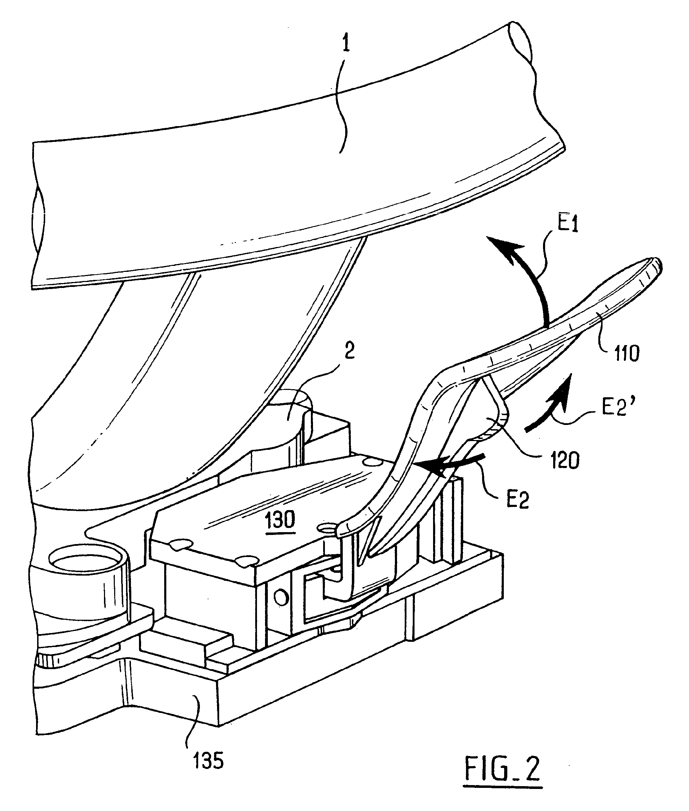

En référence aux figures 1 et 2, nous allons décrire le premier mode de réalisation de l'invention.

Un système de commande de commutation pour piloter une fonction présentant deux états comprend un premier élément de commande 110 apte à mettre en oeuvre la fonction selon un premier de ces deux états et un deuxième élément de commande 120 apte à mettre en oeuvre ladite fonction selon un deuxième état de ces deux états. Les deux éléments de commande 110 et 120 sont ici des palettes reliées à un boîtier 130 contenant un mécanisme de commutation apte à réaliser ladite fonction. Le boîtier 130 est ici installé sur un plateau 135 qui peut être de préférence un plateau situé en haut d'une colonne de direction d'un véhicule automobile comme cela est illustré en figure 2, où le boîtier 130 est installé sous un volant 1 monté sur un support 2 en haut de la colonne de direction. Ainsi, un utilisateur ayant les mains sur le volant peut atteindre les deux organes de commande 110 et 120 à l'aide d'une seule main sans quitter le volant d'avec ladite main.

En fonctionnement, la palette 110 est apte à se déplacer selon un mouvement E1 par rapport au boîtier 130. De préférence, le mouvement E1 s'effectue selon un plan qui est sensiblement orthogonal à un plan du volant 1. De manière préférentielle, le mouvement de la palette 110 est un mouvement de rotation par rapport au boîtier 130 dans le plan précité précédemment et ce en direction du volant. A l'utilisation, l'utilisateur tire sur la palette 110 de manière à réaliser ledit mouvement E1.

La palette 120, située sous la palette 110, peut se déplacer dans un plan qui est sensiblement orthogonal au plan de déplacement de la palette 110. De manière préférentielle, la palette 120 effectue un mouvement de rotation par rapport au boitier 130 dont l'axe est sensiblement orthogonal à un axe de rotation du mouvement E1. La direction du mouvement de la palette 120 est de préférence dans le sens de la flèche E2, c'est-à-dire que l'utilisateur tire vers lui la palette 120, s'il manipule les éléments d'organe 110 et 120 de la main droite. Dans une variante de réalisation, la palette 120 peut être déplacée dans le sens de la flèche E2', c'est-à-dire que l'utilisateur pousse vers l'avant la palette 120 pour mettre en oeuvre l'état associé à la palette 120 de la fonction.

De manière préférentielle, dans le cas d'une commande d'une boîte de vitesse impulsionnelle, la palette 110 sert à monter les rapports de la boîte de vitesse alors que la palette 120 sert à les descendre. Une telle disposition est intuitive car la palette 110 se déplaçant vers le volant est assimilée par l'utilisateur à un déplacement vers le haut qui est facilement associable avec le fait de monter les rapports d'une boîte de vitesse, alors que de déplacer la palette 120 selon la direction et le sens indiqué par la flèche E2 est du point de vue de l'utilisateur un déplacement vers le bas aisément associable par ledit utilisateur au fait de descendre les rapports de vitesse. Comme dans le cadre d'une commande de boîte de vitesse impulsionnelle les deux états de la fonction réalisée par les palettes 110 et 120 sont antagonistes et ne peuvent être mises en oeuvre de manière simultanée. La différenciation d'utilisation par deux mouvements bien distincts tels que décrits précédemment évite l'utilisation simultanée, ce qui augmente encore la sécurité d'utilisation de la boîte de vitesse.

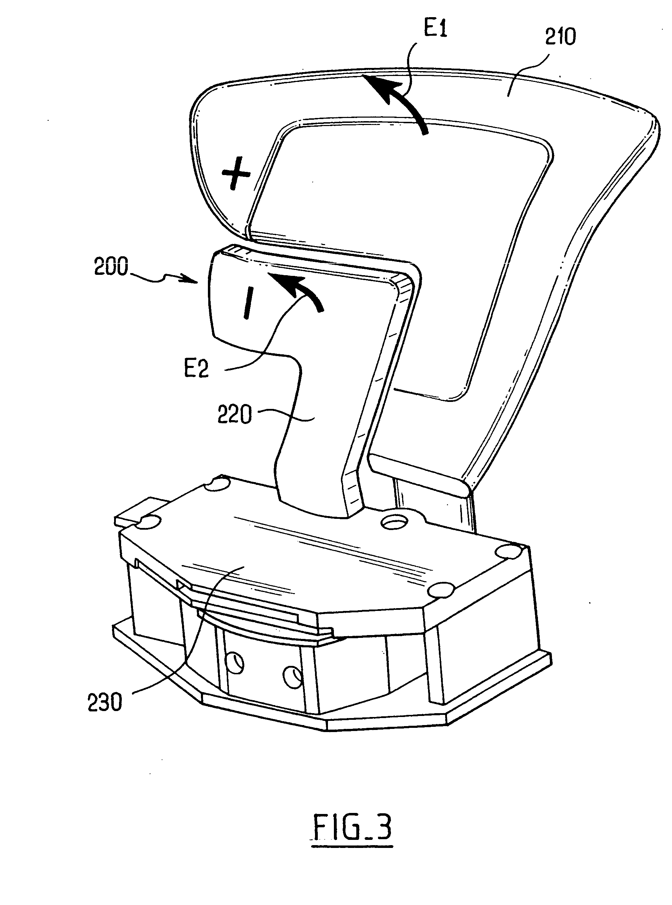

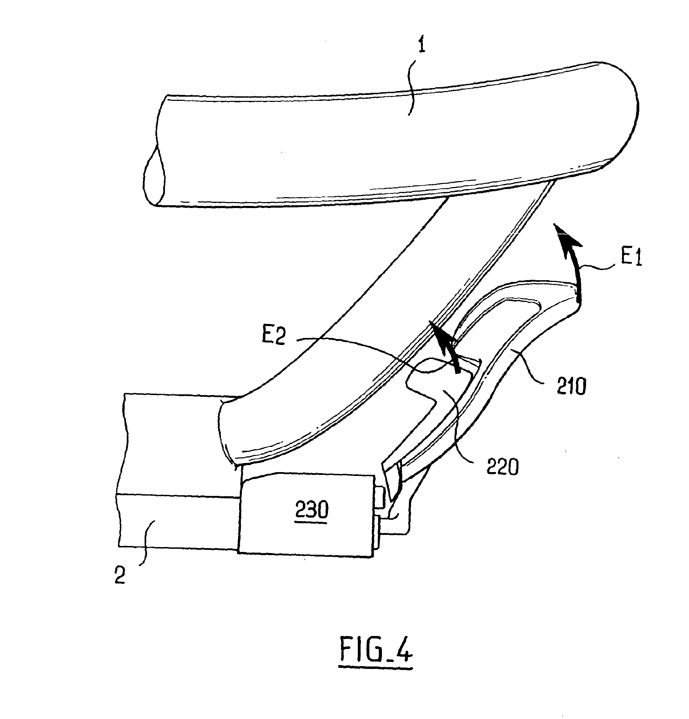

En référence aux figures 3 et 4, nous allons maintenant décrire un second mode de réalisation de l'invention.

Le système de commande de commutation 200 comprend, comme précédemment, deux palettes 210 et 220 montées sur un boîtier 230 contenant le mécanisme de commutation de manière à réaliser la fonction qui lui est dédiée. La première palette 210 permet de mettre en oeuvre un premier état de ladite fonction alors que ladite palette 220 est apte à mettre en oeuvre un second état de ladite fonction. Comme précédemment, et comme illustré à la figure 4, le montage du boîtier 230 avec les deux palettes 210 et 220 s'effectue de la même manière que pour le système de commande de commutation 100 précédemment décrit, sous le volant.

La palette 210, tout comme la palette 220, est apte à se déplacer dans un plan sensiblement perpendiculaire à un plan du volant 1. Bien que s'étendant dans la même région de l'espace, de préférence située sous le volant, la palette 220 est décalée géographiquement dans cette région par rapport à la palette 210. De ce fait, l'actionnement de la palette 210 par un utilisateur est identique à l'actionnement de la palette 110 du mode de réalisation précédent : la palette 210 effectue un mouvement de rotation E1 par rapport au boîtier de commande 230 en direction du volant. Bien que la palette 220 effectue un mouvement E2 très similaire au mouvement E1, c'est-à-dire qu'elle est montée à rotation par rapport au boîtier de commande 230 et que ledit mouvement de rotation de la palette 220 est similaire au mouvement de rotation de la palette 210, l'utilisateur qui désire mettre en oeuvre la palette 220 est obligé d'effectuer un mouvement supplémentaire avec sa main de manière à atteindre la palette 220. Du fait de ce déplacement supplémentaire pour atteindre la palette 220, l'utilisateur ne peut confondre les deux palettes lors de l'utilisation. De ce fait, ceci augmente la sécurité d'utilisation de la boîte de vitesse, si le boîtier 230 est destiné à commander une telle boîte.

Bien entendu, on peut apporter à la présente invention de nombreuses modifications sans sortir du cadre de celle-ci.

## Revendications

1. Système de commande de commutation (100 ; 200) pour un véhicule apte à réaliser une fonction présentant deux états, comprenant deux éléments de commande (110, 120 ; 210, 220) agencés de sorte que chaque élément de commande met en oeuvre la fonction selon un de ces états respectivement , **caractérisé** en que le système de commande de commutation comporte en outre un mécanisme unique de commutation (130, 230) apte à réaliser la fonction, les deux éléments de commande étant liés à ce mécanisme et s'étendant sensiblement dans une seule et même région de l'espace, l'un (220) parmi les deux éléments de commande (210, 220) étant agencé de sorte que, préalablement à sa mise en oeuvre, un utilisateur doit effectuer un déplacement supplémentaire pour l'atteindre par rapport à l'autre (210) parmi les deux éléments de commande.

2. Système selon la revendication 1, **caractérisé en ce que** les deux éléments effectuent des déplacements (E1, E2) sensiblement identiques lors de leur mise en oeuvre.

3. Système selon l'une des revendications 1 à 2, **caractérisé en ce que** les deux éléments de commande se déplacent lors de leur mise en oeuvre selon des plans parallèles entre eux sensiblement.

4. Système selon l'une des revendications 1 à 3, **caractérisé en ce que** les deux états de la fonction sont antagonistes.

5. Système selon l'une des revendications 1 à 4, **caractérisé en ce que** le système de commande de commutation est situé au niveau d'un haut de colonne de direction.

6. Système selon l'une des revendications 1 à 5, **caractérisé en ce que** les éléments de commande s'étendent dans une région de l'espace située sous un volant de direction.

7. Système selon la revendication 3, **caractérisé en ce que** le plan de déplacement des éléments de commande sont sensiblement orthogonaux au plan contenant le volant de direction (1).

8. Système selon l'une des revendications 1 à 7, **caractérisé en ce que** le système de commande de commutation pilote une boîte de vitesse.
